# DEMANDE DE BREVET EUROPEEN

(11) **EP 1 297 739 A1**
(43) Date de publication de la demande: **02.04.2003**
(21) Numéro de dépôt: 02356176.4
(22) Date de dépôt: 16.09.2002
(51) Int. Cl.: A01G 9/02, A47G 7/04

(54) **Jardinière empilable avec consoles de suspension**

(30) Priorité: 28.09.2001 FR 0112798
(71) Demandeur: Riviera, 01100 Oyonnax (FR)
(72) Inventeur: Bianchi, Josiane, 01100 Bellignat (FR)
(74) Mandataire: Guerre, Dominique

(57) **Abrégé**

L'invention concerne une jardinière comprenant un corps (2) en matière plastique, et au moins une console de suspension (6) formée chacune par un fil métallique plié pour former un crochet supérieur (6a), une partie intermédiaire (6b) et une partie inférieure (6c).

Selon l'invention, la partie intermédiaire (6b) de la console (6) est inclinée par rapport au plan médian vertical longitudinal de la jardinière suivant un angle (A), plus grand que l'angle d'inclinaison (B) par rapport à ce même plan (P) du flanc arrière (5) de la jardinière, et traverse ce flanc (5) du haut vers le bas en allant de l'extérieur vers l'intérieur de la jardinière, au moins ladite partie intermédiaire (6b) étant liée au flanc (5) par une enveloppe tubulaire (8), monolithique avec le flanc (5).

## Description

L'invention est relative aux jardinières et autres contenants pour espèces florales, se suspendant contre les garde-corps de balcons.

Traditionnellement, la suspension d'une jardinière est assurée par des consoles métalliques comportant a) une partie sensiblement verticale venant contre le garde corps, b) un crochet supérieur tourné à l'opposé de la jardinière pour s'accrocher sur la main courante du garde corps, et c) une partie inférieure sensiblement horizontale, venant sous le fond de la jardinière pour la supporter.

Ces consoles peuvent être indépendantes et amovibles, comme cela est décrit dans les documents FR-A-1 367 888 ou FR-A- 2 617 030, ou être reliées par groupe de deux ou trois dans une armature de soutien d'une jardinière.

Dans certaines formes de réalisation, et pour améliorer la liaison entre la jardinière et le garde corps, par exemple pour empêcher que la jardinière s'échappe de ses consoles sous les sollicitations éoliennes, dans certaines formes de réalisation, les moyens de suspension sont rendus solidaires du corps de la jardinière. Il en est ainsi dans le document FR-A-1 442 219 où les montants des consoles sont monolithiques avec la jardinière, sont réalisées en matière plastique et forment des saillies verticales à l'intérieur de celle-ci.

Lors de l'engagement d'une jardinière dans le volume intérieur d'une autre jardinière, ces saillies limitent la pénétration de la jardinière supérieure dans celle inférieure, de sorte que l'empilage est encombrant en hauteur, ce qui conduit à des volumes importants pour le stockage, le transport et la présentation en vente.

Dans le document FR-A-2 784 880, la jardinière comporte, de moulage, d'une part et dans sa partie supérieure, des pattes perforées ou des trous pour l'enfilage de la partie supérieure des consoles, et, d'autre part et dans son fond, des gorges de positionnement des parties horizontales des consoles.

Quand les consoles sont mises en place, leur partie supérieure et leur partie intermédiaire augmentent l'encombrement intérieur de la jardinière et amènent à former des lots de jardinières empilées qui sont encombrants. Pour remédier à cela, les jardinières sont empilées sans les consoles et celles-ci sont mises en place par l'utilisateur, en général peu expérimenté pour ce genre de manipulation.

La présente invention a pour objet de remédier à ces inconvénients en fournissant une jardinière faisant corps avec au moins une console de suspension et pouvant être empilée pour former des lots ayant sensiblement le même volume que ceux des lots de jardinières sans consoles.

A cet effet, dans la jardinière selon l'invention, la partie intermédiaire de la ou de chaque console, d'une part, est inclinée par rapport au plan médian vertical longitudinal de la jardinière suivant un angle plus grand que l'angle d'inclinaison par rapport à ce même plan du flanc arrière de la jardinière et, d'autre part, traverse ce flanc du haut vers le bas en allant de l'extérieur vers l'intérieur de la jardinière, au moins ladite partie intermédiaire étant liée au flanc par une enveloppe tubulaire, monolithique avec le flanc et formée par surmoulage sur cette partie intermédiaire, lors du moulage du corps de la jardinière.

Ainsi, non seulement les consoles de suspension d'une jardinière sont monolithiques avec celle-ci, mais présentent une partie intermédiaire qui est aménagée pour ne pas gêner l'empilage des corps de jardinière.

Dans une forme d'exécution préférée, la partie inférieure et horizontale de chaque console est liée au fond de la jardinière par une enveloppe tubulaire saillant de la face interne de ce fond, disposée dans la continuité de l'enveloppe tubulaire de la partie intermédiaire, et également réalisée par surmoulage en même temps que le corps de jardinière.

L'enveloppe tubulaire améliore la rigidité de la console, qui peut ainsi être réalisée dans un fil de section moins importante.

D'autres caractéristiques et avantages ressortiront de la description qui suit en référence au dessin schématique annexé représentant une forme d'exécution d'une jardinière selon l'invention.
Figure 1 est une vue en perspective de la jardinière,
Figure 2 en est une vue de côté, en coupe transversale et à échelle agrandie,
Figure 3 est une partielle en coupe montrant les difficultés d'empilage de deux jardinières non conformes à l'invention,
Figure 4 est une vue partielle en coupe montrant l'empilage de deux jardinières selon l'invention.

Dans ce dessin, la référence numérique 2 désigne, de manière générale, le corps de jardinière de forme générale parallélépipédique composé d'un fond 3, de flancs transversaux 4 et de flancs longitudinaux 5. Ces flancs, qui vont en s'évasant vers le haut, sont ceinturés par un rebord 7. Les moyens de suspension de la jardinière comprennent deux consoles 6 comportant, en partie supérieure, un crochet 6a tourné à l'opposé de l'ouverture de la jardinière, une partie intermédiaire sensiblement verticale 6b et une partie inférieure sensiblement horizontale 6c, destinée à soutenir le corps de la jardinière.

Selon l'invention, la partie intermédiaire 6b de chaque console est inclinée par rapport au plan médian vertical et longitudinal P du corps de jardinière, d'un angle A qui est plus grand que l'angle B formé entre le même plan médian P et le flanc longitudinal arrière 5 coopérant avec la console. En raison de cette différence angulaire, la partie intermédiaire 6b traverse le flanc 5 en allant du haut vers le bas, et de l'extérieur vers l'intérieur.

Le positionnement et le maintien de la partie intermédiaire 6b est assuré par une enveloppe tubulaire 8 qui est réalisée en matière synthétique, qui s'étend sur toute la hauteur du pot et dépasse même de son rebord périphérique 7. Cette enveloppe 8 est réalisée par surmoulage sur la console 6 pendant le moulage du corps de la jardinière, et est donc monolithique avec ce corps.

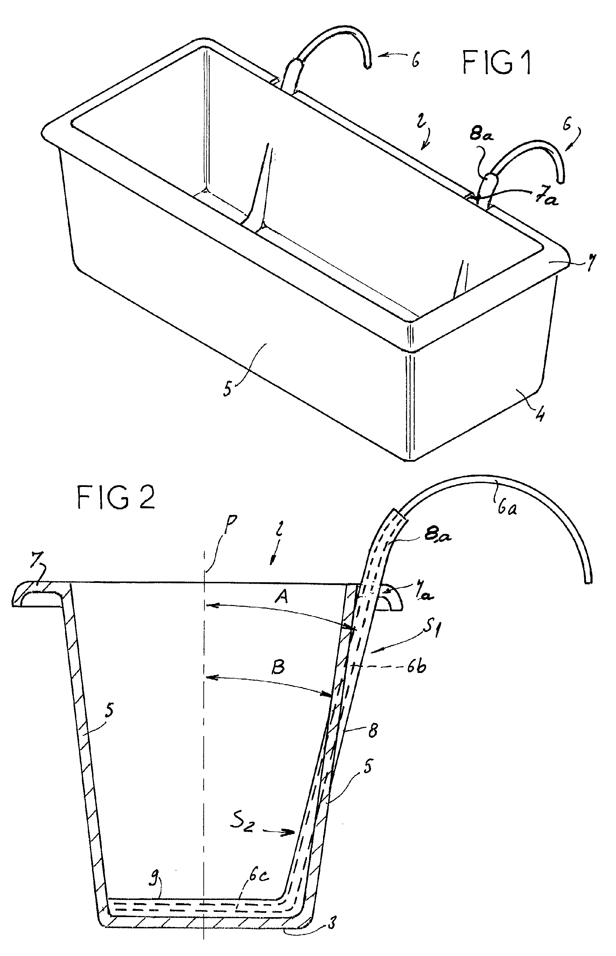

Pour simplifier la réalisation du moule et les conditions de moulage, la partie 8a de chaque enveloppe 8 qui renforce le crochet 6a passe dans une interruption 7a du rebord 7, comme montré figure 1.

Dans la forme d'exécution représentée, l'enveloppe tubulaire 8 se continue sur le fond 3 par une enveloppe tubulaire 9 contenant la partie inférieure horizontale 6c de la console. Bien entendu, l'enveloppe 9 est réalisée en même temps que l'enveloppe 8 et la jardinière, de manière à être monolithique avec celle-ci.

En raison de cette disposition et comme montré à la figure 2, chaque console forme sur la jardinière, une saillie supérieure S1 qui est disposée à l'extérieur et une saillie inférieure S2 qui est disposée à l'intérieur de son corps.

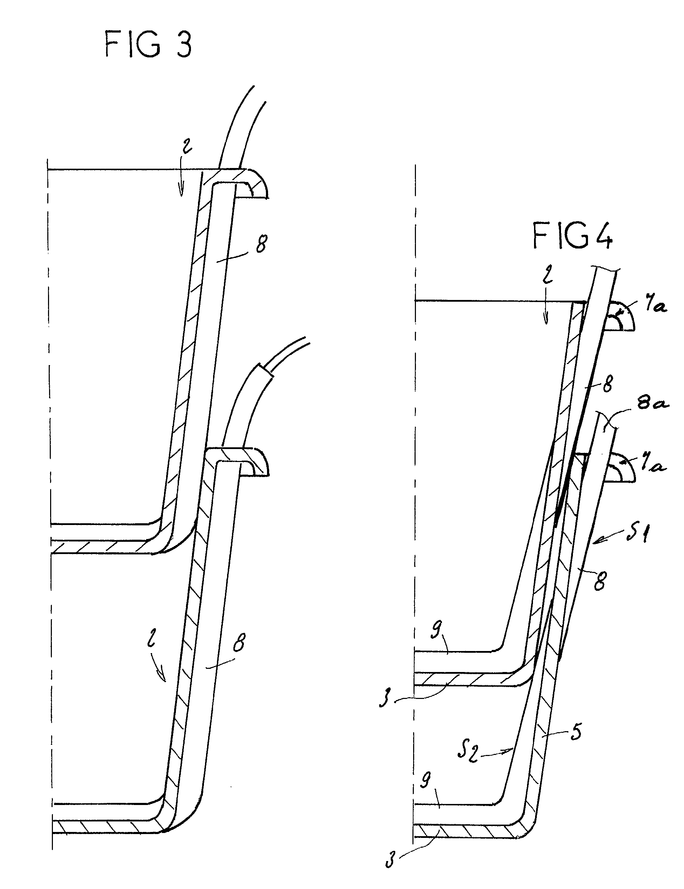

Comme montré à la figure 4, cet aménagement facilite l'empilage de la jardinière puisqu'il dégage son embouchure en permettant d'engager davantage une jardinière superposée. De même, il dégage l'extérieur de la partie inférieure de la jardinière en facilitant sa pénétration dans la jardinière sous jacente.

La figure 3 montre, à titre de comparaison, que si les parties intermédiaires 6b des consoles et leurs enveloppes 8 sont parallèles au flanc 5, l'encombrement de la partie inférieure de chaque jardinière est plus grand, ce qui, lors de l'empilage de deux jardinières, limite la pénétration de la jardinière supérieure dans la jardinière inférieure, et augmente ainsi le volume du lot de jardinières empilées.

Les enveloppes 8 et 9 assurent non seulement la liaison de chaque console avec la jardinière, mais aussi la protection contre la rouille de ces consoles tout en augmentant leur rigidité. De même, la continuité entre les enveloppes 8 et 9 renforce l'angle formé entre les parties 6b et 6c de chaque console et améliore la rigidité générale de la jardinière.

Il est évident que le nombre de consoles par jardinière peut être différent de deux comme représenté et peut, par exemple, être de un, trois ou plus, selon la longueur et/ou la forme générale de la jardinière.

## Revendications

1. Jardinière empilable avec consoles de suspension comprenant un corps (2) en matière plastique, de forme générale parallélépipédique à flancs évasés (4, 5), et au moins une console de suspension (6) formée par un fil métallique plié pour former un crochet supérieur (6a), tourné à l'opposé de la jardinière, une partie intermédiaire (6b), sensiblement verticale, et une partie inférieure (6c), sensiblement horizontale, cette console (6) étant solidaire du corps, **caractérisée en ce que** la partie intermédiaire (6b) de la ou de chaque console (6) est inclinée par rapport au plan médian vertical longitudinal de la jardinière suivant un angle (A) plus grand que l'angle d'inclinaison (B) par rapport à ce même plan (P) du flanc arrière (5) de la jardinière et traverse ce flanc (5) du haut vers le bas en allant de l'extérieur vers l'intérieur de la jardinière, au moins ladite partie intermédiaire (6b) étant liée au flanc (5) par une enveloppe tubulaire (8), monolithique avec le flanc (5) et formée par surmoulage sur cette partie intermédiaire (6b), lors du moulage du corps de la jardinière.

2. Jardinière selon la revendication 1, **caractérisée en ce que** la partie inférieure et horizontale (6c) de chaque console (6) est liée au fond (3) de la jardinière par une enveloppe tubulaire (9) saillant de la face interne de ce fond, disposée dans la continuité de l'enveloppe tubulaire (8) de la partie intermédiaire (6b), et également réalisée par surmoulage, en même temps que le corps de jardinière.
